# EUROPEAN PATENT SPECIFICATION

(11) **EP 4 404 798 B1**
(45) Date of publication and mention of the grant of the patent: **13.08.2025**
(21) Application number: 22793478.3
(22) Date of filing: 20.09.2022
(51) Int. Cl.: A47J 31/42, A47J 42/50, A47J 31/52

(54) **MACHINE AND METHOD FOR PREPARING BEVERAGES BASED ON COFFEE BEANS**
MASCHINE UND VERFAHREN ZUR HERSTELLUNG VON GETRÄNKEN AUF BASIS VON KAFFEEBOHNEN
MACHINE ET PROCÉDÉ DE PRÉPARATION DE BOISSONS À BASE DE GRAINS DE CAFÉ

(30) Priority: 21.09.2021 IT 202100024248
(43) Date of publication of application: 31.07.2024
(73) Proprietor: De' Longhi Appliances S.r.l. Con Unico Socio, 31100 Treviso (IT)
(72) Inventor: PANCIERA, Antonio, 31100 Treviso (IT); TREVISAN, Igor, 31100 Treviso (IT); SALVADORI, Stefano, 31100 Treviso (IT); ROSETTA, Simone, 31100 Treviso (IT)
(74) Representative: Petraz, Gilberto Luigi
(86) International application number: PCT/IT2022/050253
(87) International publication number: WO 2023/047429

(56) References cited:
- CN-U- 213 255 768
- DE-A1- 102019 200 788
- US-B2- 8 944 354

## Description

### FIELD OF THE INVENTION

The present invention concerns a machine and a method for preparing coffee-based beverages, preferably espresso coffee, starting from whole coffee beans.

### BACKGROUND OF THE INVENTION

Machines for preparing coffee-based beverages are known, starting from whole coffee beans, which comprise a hopper in which the whole coffee beans are disposed, a grinding device to grind them in order to produce a coffee powder, and a brewing unit, fed by a hydraulic circuit, which receives the coffee powder and brews it to produce the coffee-based beverage.

It is also known that in order to prepare a coffee-based beverage by brewing, it is necessary to set and control a plurality of functioning parameters of the machine, such as, for example but not only, the pressure of the brewing chamber, the temperature and the quantity of the brewing water, the granulometry and the quantity of coffee powder used for each beverage, and others.

Usually, these functioning parameters vary according to the type, variety and characteristics of the coffee beans used to prepare the coffee powder to be infused. The most common types of coffee are, for example, Coffea Arabica, Coffea Robusta, or Canephora, Coffea Liberica and Coffea Excelsa.

In this context, machines for producing coffee-based beverages are known, which allow to modify at least some of these functioning parameters, by acting, mostly manually, on the settings of some components, such as, for example, the brewing unit, the grinding device, the dosing unit and others.

However, to adjust and set the functioning parameters of the machine in order to obtain a "good" coffee-based beverage, a certain experience and knowledge of the correlation between the actual characteristics of the coffee beans, the functioning parameters of the machine and the final characteristics of the coffee-based beverage is required.

Usually, the average consumer does not have the experience required to adjust these parameters manually, and therefore he/she would have to try to modify them in an approximate manner, or by trial and error, until a satisfactory result is obtained, but without being sure of having reached the optimal setting of the machine in objective terms.

Furthermore, since these functioning parameters are correlated to the varieties of coffee beans used, each time a new variety or a new blend of varieties of coffee beans is used, it is necessary to adjust the functioning parameters again.

All this could also lead to dissatisfaction on the part of the consumer, who is required to perform burdensome operations to set up the machine correctly, and also to a negative judgment on the functioning of the machine, if the coffee obtained does not satisfy the consumer's tastes.

There are also machines for preparing coffee-based beverages which comprise means to recognize the information printed on the commercial package containing the coffee beans, such as, for example, bar codes, QR codes, RFIDs and others. By means of these recognition means, the machine can recognize the varieties of coffee beans contained in the package and consequently optimize its functioning parameters.

However, these solutions are limited to reading the information contained on the packages of coffee beans, although not all coffee packages contain all the necessary information.

In fact, there are still many roasting companies, even small ones, that put blends on the market consisting of different varieties of coffee, without reporting on the package, in a machine-readable way, the relevant information on the composition of the blend it contains.

Furthermore, this solution requires the user to read the information contained on the package of coffee beans, using the recognition devices, at least every time he/she changes the variety or blend of coffee beans.

Document DE102019200788 describes a fully automatic coffee machine equipped with a device for setting at least one delivery parameter and a sensor device designed to record at least one parameter of the coffee bean and connected to the setting device, which adjusts the delivery parameter according to the parameter detected by the sensor device. The sensor device comprises a camera by means of which, based on the detection of the color of the beans, which is compared with a characteristic table, their level of roasting is determined, or an optical sensor by means of which it is possible to read a bar code or two-dimensional code on a package of coffee beans.

US8944354B2 describes a machine for preparing coffee comprising a plurality of containers, each suitable to contain one type of coffee beans, and each selectively connectable to the machine. Each container can comprise information regarding the type of coffee beans contained in it and the machine can comprise an identification component of an optical type by means of which it is possible to receive information regarding the type of coffee beans and adapt the functioning of the machine based on the type of beans associated with the container identified.

There is therefore a need to perfect a machine and a method for preparing coffee-based beverages which can overcome at least one of the disadvantages of the state of the art. All of this by solving the technical problem of ensuring that the machine does not need information coming from outside, or provided by a consumer, but that it can acquire such information autonomously, in order to define the optimal functioning parameters.

In particular, one purpose of the present invention is to provide a machine for preparing coffee-based beverages, starting from coffee beans, which allows even an inexperienced user to obtain an excellent coffee-based beverage, in objective terms, without requiring intervention by the user to set the functioning parameters of the machine.

Another purpose of the present invention is to provide a machine for preparing coffee-based beverages which is able to automatically adjust and optimize its functioning parameters based on the actual coffee beans used to prepare the coffee-based beverage.

Another purpose of the present invention is to provide a machine for preparing beverages which does not require the use of specific containers or packages for the coffee beans which comprise suitable bar codes, nor does it require to create a correlation between a container and the coffee beans contained in it.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to resolve the above technical problem in a new and original way, also obtaining considerable advantages compared to the state of the prior art, a machine according to the present invention for preparing coffee-based beverages starting from coffee beans comprises a hopper configured to contain the coffee beans, a grinding member associated with the hopper to grind the coffee beans and obtain a coffee powder, brewing means configured to subject the coffee powder to brewing, and hydraulic means configured to supply water to the brewing means.

In accordance with one aspect of the present invention, the machine also comprises identification means configured to automatically identify one or more actual characteristics of the coffee beans and to automatically associate with the one or more actual characteristics one or more optimal functioning parameters for at least one of either the grinding member, the brewing means or the hydraulic means.

This achieves at least the advantage of setting the functioning parameters of the machine automatically, without the use of external means and without user intervention, on the basis of the actual characteristics of the coffee beans used.

In accordance with another aspect of the present invention, the one or more actual characteristics comprise at least one characteristic selected from a group comprising the different varieties of the beans, the presence percentage of each of such varieties, the roasting level of the beans and the surface oiliness thereof.

According to some embodiments, the actual characteristics as above comprise at least the variety of coffee beans.

In accordance with another aspect of the present invention, the identification means comprise at least one image acquisition device configured to acquire at least one image of the coffee beans contained in the hopper.

The image acquisition device can be disposed in proximity to, or inside, the hopper.

Preferably, the image acquisition device is configured to acquire a series of images of the coffee beans in succession.

In accordance with another aspect of the present invention, the identification means also comprise a lighting device configured to selectively illuminate the inside of the hopper.

In accordance with another aspect of the invention, the identification means are configured to selectively emit light beams that have at least two different wavelengths.

According to the invention, the lighting device comprises at least two lighting elements configured to emit respective light beams that have different wavelengths from each other, and the image acquisition device is configured to acquire a sequence of images of the beans illuminated with different wavelengths.

The acquisition of at least two images of the beans illuminated with at least two different wavelengths allows to obtain more, as well as more precise, information on the type of coffee beans. In particular, on the basis of the processing and comparison of the images acquired, it is possible to achieve one or more of the following advantages:
- recognize the shape of the coffee beans so as to identify their variety/type;
- recognize the color shades with greater precision in order to identify their roasting level or surface oiliness level.

In accordance with another aspect of the present invention, the identification means also comprise a processing unit comprising analysis means which are configured to analyze at least one of either the shape, sizes or color of the coffee beans represented in the image, or series of images, and consequently assign the one or more actual characteristics thereto.

According to another aspect of the invention, the analysis means are configured to analyze the shape, sizes and color of the coffee beans represented in the image, or series of images, and consequently assign the one or more actual characteristics thereto.

In accordance with another aspect of the present invention, the processing unit also comprises comparison means configured to compare the one or more actual characteristics with one or more combinations of predetermined characteristics stored in a memory of the processing unit, each of which is associated with a corresponding combination of predetermined functioning parameters, which are also stored in the memory of the processing unit, and then to associate with the one or more actual characteristics a determinate combination of predetermined functioning parameters corresponding to the combination of predetermined characteristics most similar to the one or more actual characteristics.

In accordance with another aspect of the present invention, the processing unit also comprises assigning means for assigning determinate numerical values to the one or more actual characteristics, and processing means that process, according to one or more correlation equations stored in a memory of the processing unit, the numerical values in order to obtain the one or more functioning parameters.

In accordance with another aspect of the present invention, the machine also comprises a command unit configured to command and adjust the functioning of at least one of either the hopper, the grinding member, the hydraulic means or the brewing means. Furthermore, the processing unit is configured to transmit the one or more functioning parameters to the command unit in order to control and adjust the functioning of at least one of either the hopper, the grinding member, the hydraulic means or the brewing means.

In accordance with another aspect of the present invention, the one or more functioning parameters comprise at least one parameter selected from a group comprising the temperature of the brewing water, the brewing time, the flow rate of the brewing water, the quantity of brewing water, the brewing pressure, the quantity of coffee-based beverage to be prepared, the pre-brewing parameters comprising the temperature, the quantity of pre-brewing water, the pre-brewing time, the beverage delivery time, the speed and flow rate of the brewing water, the granulometry/grinding level of the coffee powder and the quantity of the latter to be subjected to brewing.

The present invention also concerns a method for preparing coffee-based beverages starting from coffee beans by means of a machine that has a hopper configured to contain the coffee beans, a grinding member associated with the hopper to grind the coffee beans in order to obtain a coffee powder, brewing means configured to subject the coffee powder to brewing, and hydraulic means configured to supply water to the brewing means.

In accordance with another aspect of the present invention, the method comprises an identification step in which one or more actual characteristics of the coffee beans are automatically identified by means of identification means, and one or more functioning parameters for at least one of either the grinding member, the brewing means or the hydraulic means are automatically associated with the one or more actual characteristics.

In accordance with another aspect of the present invention, the identification step provides to:
- acquire at least two images of the coffee beans illuminated on each occasion by one of at least two lighting elements configured to emit respective light beams that have different wavelengths from each other;
- process the images to identify the one or more actual characteristics.

According to another aspect of the invention, the identification step provides to analyze at least one of either the shape, sizes or color of the coffee beans represented in the image in order to assign to the image the one or more actual characteristics as above, selected from a group comprising the different varieties of the beans, the presence percentage of each of the varieties, the roasting level of the beans and the surface oiliness thereof.

In accordance with another aspect of the present invention, in order to assign the one or more actual characteristics to the image, the identification step provides to analyze the shape, sizes and color of the coffee beans represented in the image.

In accordance with another aspect of the present invention, the identification step also provides to compare the one or more actual characteristics with one or more combinations of predetermined characteristics stored in a memory of a processing unit, each of which is associated with a corresponding combination of predetermined functioning parameters stored in such memory of such processing unit and then to associate with the one or more actual characteristics a determinate combination of predetermined functioning parameters corresponding to the combination of predetermined characteristics most similar to the one or more actual characteristics as above.

In accordance with another aspect of the present invention, the identification step also provides to assign determinate numerical values to the one or more actual characteristics and to process such numerical values in order to obtain the one or more functioning parameters.

In accordance with another aspect of the present invention, the method also comprises an adjustment step in which the functioning parameters of the machine are adjusted on the basis of the one or more functioning parameters as above.

### DESCRIPTION OF THE DRAWINGS

These and other aspects, characteristics and advantages of the present invention will become apparent from the following description of some embodiments, given as a non-restrictive example with reference to the attached drawings wherein:
- figs. 1, 2 and 3 are diagrams of three different embodiments of a machine for preparing beverages based on coffee beans, in accordance with the present invention;
- fig. 4 is a schematic section view of a part of a machine for preparing beverages based on coffee beans, in accordance with one embodiment of the present invention;
- figs. 5, 6 and 7 are schematic views of three embodiments of a part of a machine for preparing beverages based on coffee beans in accordance with the present invention;
- figs. 8, 9 and 10 schematically show the shape of three different varieties of coffee beans.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

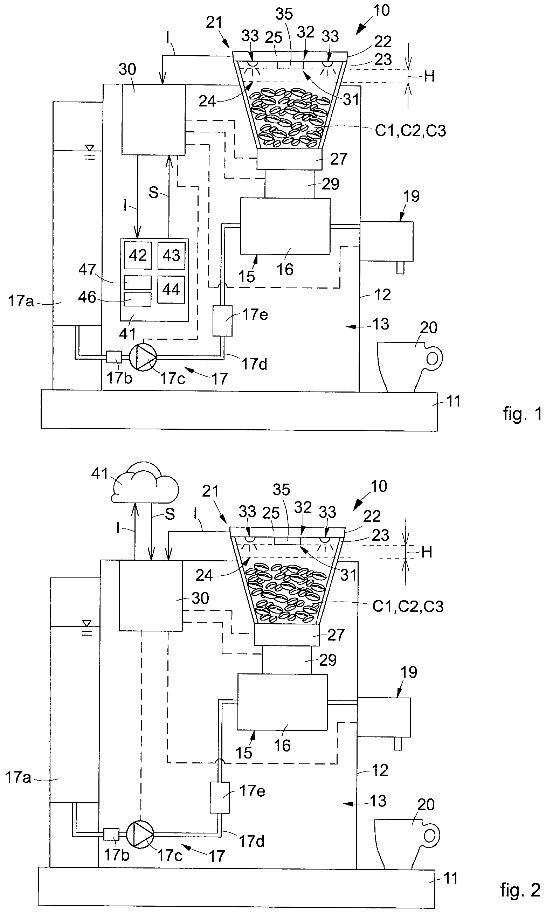

With reference to figs. 1, 2 and 3, a machine for preparing coffee-based beverages, hereafter machine 10, according to the present invention, is suitable to prepare a coffee-based beverage starting from coffee beans, preferably whole ones, denoted by C1, C2, C3.

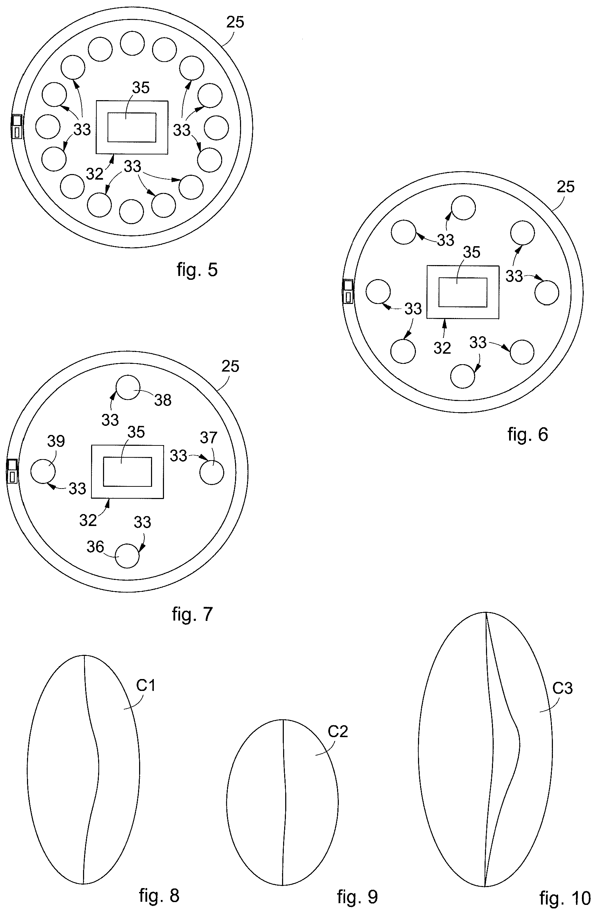

The coffee beans C1, C2, C3 can come from different types such as, for example, Coffea Arabica (fig. 8), Coffea Robusta, or Canephora, (fig. 9) and Coffea Liberica (fig. 10). Each type of coffee beans can in turn comprise a plurality of varieties, for example depending on the geographical area of origin or the cultivation altitude.

The machine 10 comprises a rest base 11 on which there is mounted a frame 12 shaped in such a way as to define a compartment 13 in which a brewing unit 15 is housed comprising a brewing chamber 16 configured to contain a determinate quantity of coffee powder P to be subjected to brewing, in order to obtain the coffee-based beverage.

Furthermore, the compartment 13 houses both a hydraulic circuit 17, comprising, for example, a tank 17a, a flow meter 17b, a pump 17c, pipes 17d and a boiler 17e, to feed water to the brewing unit 15, and also a delivery unit 19, fluidically connected to the brewing unit 15 in order to deliver the coffee-based beverage into a container 20, for example a cup, a mug, or suchlike.

The machine 10 also comprises a grinding unit 21 and a hopper 22 which is suitable to contain the coffee beans C1, C2, C3.

The hopper 22 comprises a plurality of lateral walls 23 and a closing lid 25 which define between them a containing compartment 26 in which the coffee beans C1, C2, C3 can be disposed.

The grinding unit 21 also comprises a grinding member 29 configured to grind a quantity of coffee beans C1, C2, C3 according to a precise granulometry so as to obtain the coffee powder P to be subjected to brewing.

The grinding unit 21 can also be provided with a dosing device 27 for dosing the right quantity of coffee beans C1, C2, C3 to be ground.

According to possible variants, a dosing device suitable to dose a quantity of powder to be supplied to the brewing chamber 16 can also be provided.

The brewing unit 15, the hydraulic circuit 17, the delivery unit 19 and the dosing device 27 can be of any known type that allows to adjust the respective functioning parameters S1, ..., Sn and, therefore, will not be described in detail.

For example, the above functioning parameters S1, ..., Sn can comprise the temperature of the brewing water, the brewing time, the flow rate of the brewing water, the quantity of brewing water, the brewing pressure, the quantity of coffee beverage to be prepared, the temperature and quantity of the pre-brewing water, the quantity of coffee to be ground, the pre-brewing time, the beverage delivery time, the speed/flow rate of the brewing water, or others.

The operation of the brewing unit 15, of the hydraulic circuit 17, of the delivery unit 19 and of the grinding unit 21, to which we will refer hereafter with the term "operating components", is commanded and adjusted by a command unit 30, for example of the programmable type.

According to one aspect of the invention, the machine 10 comprises identification means 24 configured to automatically identify one or more actual characteristics F of the coffee beans C1, C2, C3 and to automatically associate with the one or more actual characteristics F one or more functioning parameters S for at least one of either the grinding member 29, the brewing unit 15 or the hydraulic circuit 17.

According to one aspect of the present invention, the identification means 24 comprise a detection member 31 associated with the hopper 22 and configured to obtain at least one image I of the coffee beans C1, C2, C3 contained in the containing compartment 26 and to transmit the image I to the command unit 30 or to a processing unit 41, as will be described below.

The detection member 31 comprises an image acquisition device 32 and a lighting device 33 which are facing toward the inside of the containing compartment 26.

According to some embodiments, at least the image acquisition device 32 and the lighting device 33 are integrated in the closing lid 25.

According to other embodiments, the image acquisition device 32 and/or the lighting device 33 can be connected to the closing lid 25 or possibly also to a top portion of a lateral wall of the hopper 22.

The image acquisition device 32 comprises a photo camera 35 with, for example, a resolution comprised between about 1 Mpx and about 16 Mpx, and the lighting device 33 comprises a plurality of lighting elements 36, 37, 38, 39, for example LED diodes, disposed in proximity to the photo camera 35.

According to the invention, the lighting device 33 comprises at least two lighting elements 36, 37, 38, 39 that have a different wavelength from each other.

Furthermore, preferably, the detection member 31 is configured to obtain a series, that is, a sequence, of images of the coffee beans C1, C2, C3 in which at least two images of such sequence are acquired when the coffee beans C1, C2, C3 are illuminated with two different wavelengths. We must clarify that hereafter in the description the term "at least one image" can mean either a single image or a sequence of images.

The command unit 30 can in particular be configured to command the lighting device 33 in such a way that it illuminates the coffee beans C1, C2, C3 alternately with the at least two different wavelengths, and to command the image acquisition device 32 in such a way that it acquires at least one image I for each wavelength.

According to some embodiments, the acquired images of one series, or sequence, are framed in substantially the same way.

According to possible variants, the acquired images of one series, or sequence, are framed differently, for example by suitably adjusting the image acquisition device 32.

In the embodiment shown in fig. 7, the lighting device 33 comprises four lighting elements 36, 37, 38, 39. For example, there can be provided a first lighting element 36 that has a wavelength comprised between about 400 nm and about 450 nm, a second lighting element 37 that has a wavelength comprised between about 450 nm and about 500 nm, a third lighting element 38 that has a wavelength comprised between about 500 nm and about 550 nm and a fourth lighting element 39 that has a wavelength comprised between about 550 nm and about 700 nm.

Preferably, the photo camera 35 is disposed in a central zone and the lighting elements 36, 37, 38, 39 are disposed around it.

Alternatively, in the embodiment shown in fig. 6 the lighting device 33 comprises eight lighting elements, or in the embodiment shown in fig. 5 the lighting device 33 comprises sixteen lighting elements, each of which can have its own wavelength, or which can be divided into groups in which the lighting elements have the same wavelength.

It is clear that the number of lighting elements and the total number of wavelengths of the beams emitted by each of them can also be different, for example a number comprised between 2 and 20.

Advantageously, the difference in wavelengths between each lighting element 36, 37, 38, 39 promotes the acquisition of an image I optimized for its processing, which will be described below. The optimized image I allows, in particular, to distinguish the shape and color of coffee beans C1, C2, C3 and consequently recognize one or more actual characteristics of the coffee beans C1, C2, C3, in particular at least their type and/or variety.

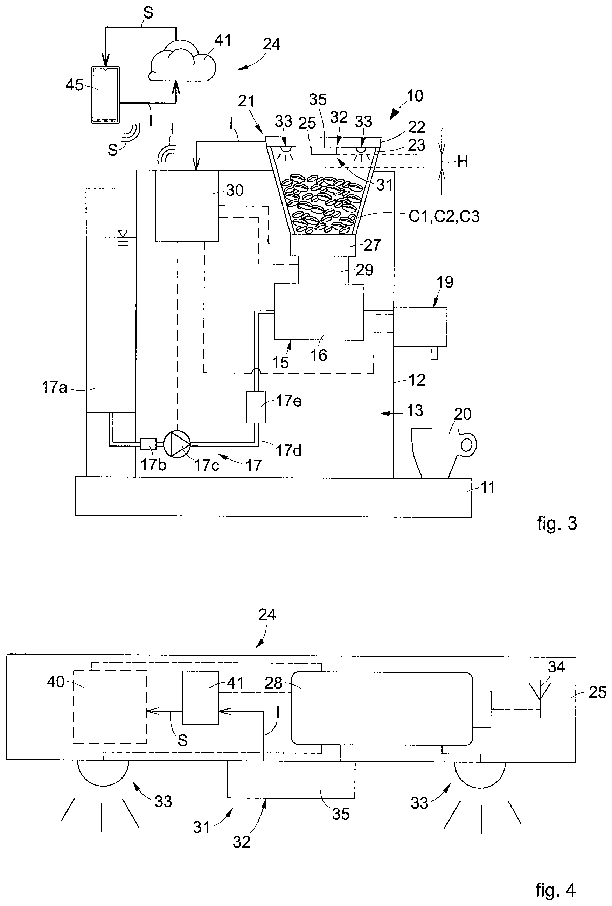

Furthermore, the lighting device 33 and/or the image acquisition device 32 are preferably disposed at a determinate minimum distance H from the maximum level of the coffee beans C1, C2, C3 contained in the containing compartment 26, which is advantageously within in a range comprised between about 1 cm and about 2 cm (fig. 3).

The overall distance between the lighting device 33 and/or the image acquisition device 32 and the coffee beans C1, C2, C3 can vary between the minimum distance H and about 20 cm, as a function of the filling level of the hopper 22 and of its overall height.

Optionally, the detection member 31 can also be configured to detect the level of the coffee beans C1, C2, C3 in the hopper 22 and to signal this information to the command unit 30.

In some embodiments, the command unit 30 can also be configured to adjust the settings of the photo camera 35 as a function of the level of coffee beans C1, C2, C3 detected and therefore of the distance with respect thereto.

By way of example, settings of the photo camera 35 can comprise: shutter aperture, possible focus function, definition, or more.

Furthermore, when the level of the coffee beans C1, C2, C3 reaches a determinate minimum value, the command unit 30 can communicate to a user the need for refilling, for example by means of warning lights or messages displayed on an interface (not shown).

In other embodiments, not shown in the drawings, the detection member 31 is integrated into a lateral wall 23 of the hopper 22 which, in these other embodiments, can be without the closing lid 25.

The command unit 30 is also configured to transmit the at least one image I to a processing unit 41 configured to process the image I in order to obtain one or more functioning parameters S1, ..., Sn, collectively indicated as set of optimal functioning parameters S, of the operating components of the machine 10. In particular, the processing unit 41 is configured to receive and process a series of at least two images of the coffee beans, respectively acquired with a light that has different wavelengths.

Furthermore, the processing unit 41 is configured to transmit the set of optimal functioning parameters S to the command unit 30, which can automatically set the operation of the operating components of the machine 10 on the basis of the set of optimal functioning parameters S.

This allows to automatically set, without the use of external means and also without the intervention of the user, the functioning parameters of the operating components of the machine 10 as a function of the actual characteristics of the coffee beans C1, C2, C3 used, in order to prepare an excellent coffee base, in objective terms.

In accordance with some embodiments of the present invention, the processing unit 41 is physically present in the machine 10 (fig. 1 or 4) and comprises a processor of any known type whatsoever and a memory unit. For example, in a first embodiment the processing unit 41 is disposed inside the compartment 13, together with the command unit 30.

In another embodiment, the processing unit 41 is located on a so-called "Cloud" platform (fig. 2). In this other embodiment, the command unit 30 is of the type that can be connected, preferably in wireless mode, to the Internet, for access to the "Cloud" platform.

According to one embodiment, described with reference to fig. 4, the lid 25 can be of the type that can be removed and separated from the hopper 22.

According to this embodiment, it can be provided that on the lid 25, together with the detection member 31 and the lighting device 33, there is also installed a battery 28, of the replaceable or rechargeable type, suitable to supply electrical power to the various components and allow the acquisition of images even when the lid 25 is not associated with a hopper 22. In this case, it can be provided that a user acquires an image I of the beans to be used in a separate position from the machine 10.

According to some embodiments, the processing unit 41 can be integrated in the lid 25 to receive and analyze the image I acquired by the photo camera 35 and to supply the set of optimal functioning parameters S to the command unit 30, for example by means of an antenna 34 or other wireless communication device.

An auxiliary control unit 40 can also be provided on the lid 25, which can communicate with the command unit 30 and/or with a processing unit 41 located on the "Cloud" platform. In this case, the auxiliary control unit 40 can be configured to command the functioning of the image acquisition device 32 and of the lighting device 33.

Alternatively, or in addition, the command unit 30 is of the type that can be connected, preferably in wireless and short-range mode, to an external electronic device 45 (fig. 3), such as a user's smartphone, which can, in turn, be connected to the Internet to access the "Cloud" platform, where the processing unit 41 can be located.

The processing unit 41 comprises a memory 47 in which algorithms for analyzing the coffee beans C1, C2, C3, shown in the at least one image I, are stored in order to assign to the coffee beans C1, C2, C3 one or more actual characteristics F1, ..., Fn, collectively referred to as set of actual characteristics F.

The processing unit 41 can be configured to analyze at least one of either the shape, sizes or color of the coffee beans C1, C2, C3 present in image I in order to assign one or more actual characteristics F1, ..., Fn.

The actual characteristics F1, ..., Fn identified by the analysis algorithms can comprise at least one of either the types and/or varieties of the coffee beans C1, C2, C3, the presence percentage of each type/variety, the roasting level of the coffee beans C1, C2, C3, the level of surface oiliness thereof or the process used to process and extract them, normally identified with the terms "Washed" or "Natural", also called dry.

Furthermore, algorithms for analyzing the coffee beans C1, C2, C3 can also recognize the presence of defective coffee beans, the presence of objects or substances that cannot be identified as coffee beans, or the presence of coffee beans unsuitable for grinding and preparing coffee such as, for example, beans with a roasting color that is too light, such as the so-called "green" coffee not yet roasted, or roasted barley seeds.

The identification algorithms are based on artificial intelligence, and preferably comprise a neural network.

In particular, for image recognition, the processing unit 41 can comprise analysis algorithms based on the state of the art of deep convolutional neural networks designed for image classification, such as EfficientNet, MobileNet, ResNet or VGG16. This allows to identify, on each occasion, the most suitable network architecture according to accuracy and computational cost requirements. Using the networks mentioned here also allows to take advantage of the use of pre-trained networks to apply "Transfer Learning" techniques, and therefore reduce the size of the data set required for their training.

Furthermore, association algorithms are stored in the memory of the processing unit 41 to associate the set of actual characteristics F of the coffee beans C1, C2, C3 to a set of optimal functioning parameters S for the operating components of the machine 10.

The set of optimal functioning parameters S comprises one or more values that refer to at least one of either the following parameters S1, ..., Sn: the temperature of the brewing water, the brewing time, the flow rate of the brewing water, the quantity of brewing water, the brewing pressure, the quantity of coffee beverage to be prepared, the temperature and quantity of the pre-brewing water, the pre-brewing time and also the beverage delivery time, the granulometry and the grinding level of the coffee powder and the quantity thereof to be subjected to brewing.

In one embodiment, a plurality of combinations of predetermined functioning parameters SM are stored in the memory of the processing unit 41, each of which is associated with a combination of predetermined characteristics FM of coffee beans. In this embodiment, the processing unit 41 is configured to compare the set of actual characteristics F with the combinations of predetermined characteristics FM. Furthermore, the processing unit 41 is also configured to associate with the one or more actual characteristics F the combination of predetermined functioning parameters SM corresponding to the combination of predetermined characteristics FM most similar to the set of actual characteristics F.

In another embodiment, in the memory of the processing unit 41 there are stored one or more equations of correlation between the characteristics F1, ..., Fn of the coffee beans C1, C2, C3 and the values of the functioning parameters S1, ..., Sn, the set of optimal functioning parameters S being determined by such equations. In particular, in this other embodiment, the processing unit 41 is configured to assign determinate numerical values N1, ..., Nn to one or more actual characteristics F1, ..., Fn and to process such values in order to obtain the set of optimal functioning parameters S.

According to some embodiments, the processing unit 41 is configured to classify the images I received in order to identify actual characteristics F, at least the type and/or variety of the photographed coffee beans C1, C2, C3.

Based on the shape and color of the coffee beans C1, C2, C3 present in the images I, it is also possible to determine whether they belong to a same type/variety or whether they belong to different type/varieties, and possibly estimate their respective percentages. The optimal functioning parameters S are therefore determined at least as a function of the type/variety of the coffee beans C1, C2, C3.

The processing unit 41 can comprise analysis means 42 configured to analyze at least one of either the shape, sizes or color of the coffee beans represented in the image, or series of images, and consequently assign the one or more actual characteristics to the coffee beans.

According to other embodiments, the analysis means 42 are configured to analyze at least one of either the shape, sizes or color of the coffee beans represented in the image, or series of images, and consequently assign the one or more actual characteristics to the coffee beans.

The processing unit can also comprise comparison means 43 configured to compare the one or more actual characteristics F with the combinations of predetermined characteristics FM.

The processing unit 41 can also comprise assigning means 44 for assigning the numerical values N1, ..., Nn to the actual characteristics F and processing means 46 that processes, according to one or more correlation equations stored in the memory 47, the numerical values in order to obtain the several functioning parameters S.

The analysis 42, comparison 43, assigning 44 and processing 46 means can be defined by respective electrical/electronic components of a CPU or of a neural network.

The operation of the machine 10 for preparing beverages based on coffee beans described heretofore, which corresponds to the method according to the present invention, comprises the following steps.

A user disposes in the containing compartment 26 of the hopper 22 a plurality of coffee beans C1, C2, C3, preferably whole ones, with which he/she wishes to prepare a beverage based on coffee beans.

The detection member 31 detects the presence of the coffee beans C1, C2, C3 in the housing compartment 26 and automatically acquires, by means of the photo camera 35, at least one image I of the beans C1, C2, C3 present in the housing compartment 26.

During the acquisition of the at least one image I, the lighting device 33 illuminates the inside of the housing compartment 26 by means of at least two lighting elements 36, 37, 38, 39 each having a determinate wavelength.

In a preferred embodiment, the detection member 31 acquires, by means of the photo camera 35, a sequence of images I of the beans C1, C2, C3 present in the housing compartment 26. For example, the detection member 31 acquires both at least a first image of the beans C1, C2, C3 present in the housing compartment 26 when a first lighting element 36 illuminates them with a first wavelength, and also at least a second image of the beans C1, C2, C3 present in the housing compartment 26 when a second lighting element 37 illuminates them with a second wavelength, different from the first wavelength.

The acquisition of a sequence of images I of the beans C1, C2, C3 illuminated with different wavelengths allows the analysis algorithms to determine the characteristics F1, ..., Fn in a faster and more efficient way, from a computational point of view.

Furthermore, in this way it is possible to obtain a plurality of different images, each suitable to provide determinate information that can help define the actual characteristics of the coffee beans C1, C2, C3 photographed.

The detection member 31 transmits the at least one image I to the command unit 30 which, in turn, transmits it to the processing unit 41.

If the processing unit 41 is integrated in the machine 10, this transmission occurs via cable (fig. 1).

If the processing unit 41 is located in a "Cloud" platform and the command unit 30 is of the type that can be connected to the Internet, the transmission of the at least one image I occurs via the Internet (fig. 2). Alternatively, if the command unit 30 is of the type that can be connected to external electronic devices 45 wirelessly and short-range, the former transmits the at least one image I to an external electronic device 45, which in turn transmits it, via the Internet, to the processing unit 41 located in the "Cloud" platform (fig. 3).

The analysis algorithms, stored in the processing unit 41, analyze the shape and sizes of the coffee beans C1, C2, C3 represented in the at least one image I in order to determine the type and varieties thereof, and also the presence percentage of the varieties identified.

In fact, it is known that the different varieties of coffee beans C1, C2, C3 have different shapes and sizes; for example, fig. 6 schematically shows a bean C1 of the "Arabica" type, fig. 7 shows a bean C2 of the "Robusta" type, and fig. 8 schematically shows a bean C3 of the "Liberica" type. It is also known that the beans of a same type can be different depending on the variety, for example, depending on the geographical origin and/or the cultivation altitude. For example, the beans of the "Maragogype" variety belonging to the "Arabica" type usually have a length of more than 10 mm, or the beans of the "Peaberry" variety of the "Robusta" type usually have a length of less than 5 mm.

The analysis algorithms can also analyze the color of the coffee beans C1, C2, C3 in order to obtain a plurality of information.

In particular, the analysis algorithms analyze the color of the coffee beans C1, C2, C3 represented in the at least one image I to determine the roasting level thereof in order to assign a roasting level to them, such as, for example, "light", "medium", "dark", "extra-dark".

In addition, or alternatively, the analysis algorithms analyze the color of the coffee beans C1, C2, C3 represented in the at least one image I also to determine the level of surface oiliness thereof in order to assign an oiliness level to them, such as, for example, "absent", "medium" or "high".

Furthermore, the analysis algorithms analyze the color of the coffee beans C1, C2, C3, to identify the process used to process and extract the beans, assigning a characteristic to them, such as, for example, "natural" or "washed".

Advantageously, the illumination of the beans C1, C2, C3 by means of a plurality of lighting elements 36, 37, 38, 39 that have different wavelengths from each other facilitates the analysis of the color of the image I and, therefore, the determination of the roasting level and surface oiliness level of the beans C1, C2, C3 represented in the image I.

We must clarify that each variety identified can be assigned a corresponding roasting level and a corresponding surface oiliness level.

At the end of the analysis of the at least one image I, the analysis algorithms provide the set of actual characteristics F of the coffee beans C1, C2, C3.

For example, a set of actual characteristics F can be: F = (blend = 40% Arabica and 60% Robusta; Arabica portion roasting level = medium; Robusta portion roasting level = extra-dark; Arabica portion surface oiliness = absent; Robusta portion surface oiliness = high).

The set of actual characteristics F of the coffee beans C1, C2, C3 is used as a starting data set to associate the set of optimal functioning parameters S with the coffee beans C1, C2, C3.

In one embodiment, the processing unit 41 compares the set of actual characteristics F with a plurality of combinations of predetermined characteristics FM. A combination of predetermined functioning parameters SM is assigned to each combination of predetermined characteristics FM. In this embodiment, the processing unit 41 associates with the set of actual characteristics F the combination of predetermined functioning parameters SM corresponding to the combination of predetermined characteristics FM most similar to the set of actual characteristics F.

In another embodiment, the processing unit 41 associates with each actual characteristic F1, ..., Fn present in the set of actual characteristics F a determinate numerical value N1, ..., Nn which is processed by means of one or more predetermined correlation equations in order to obtain the values S1, ..., Sn of the functioning parameters of the set of optimal functioning parameters S.

When the set of optimal functioning parameters S has been determined, the processing unit 41 transmits it to the command unit 30 which, on the basis thereof, automatically adjusts the operation of the operating components of the machine 10.

It is clear that modifications and/or additions of parts may be made to the machine 10 and to the method for preparing coffee-based beverages as described heretofore, without departing from the field and scope of the present invention, as defined by the claims.

It is also clear that, although the present invention has been described with reference to some specific examples, a person of skill in the art shall certainly be able to achieve many other equivalent forms of machine and method for preparing coffee-based beverages, having the characteristics as set forth in the claims and hence all coming within the field of protection defined thereby.

In the following claims, the sole purpose of the references in brackets is to facilitate reading and they must not be considered as restrictive factors with regard to the field of protection defined by the same claims.

## Claims

1. Machine (10) for preparing coffee-based beverages starting from coffee beans (C1, C2, C3) comprising a hopper (22) configured to contain said coffee beans (C1, C2, C3), a grinding member (29) associated with said hopper (22) to grind said coffee beans (C1, C2, C3) and obtain a coffee powder (P), brewing means (15) configured to subject said coffee powder (P) to brewing, hydraulic means (17) configured to supply water to said brewing means (15), it also comprises identification means (24) configured to automatically identify one or more actual characteristics (F) of said coffee beans (C1, C2, C3) and to automatically associate with said one or more actual characteristics (F) one or more functioning parameters (S) for at least one of either said grinding member (29), said brewing means (15) or said hydraulic means (17), **characterized in that** said identification means (24) comprise at least one lighting device (33) which is configured to illuminate the inside of said hopper (22) and has at least two lighting elements (36, 37, 38, 39) which are configured to emit respective light beams that have a different wavelength with respect to each other, and an image acquisition device (32, 35) configured to acquire at least two images (I) of said beans (C1, C2, C3) illuminated on each occasion by one of said at least two lighting elements (36, 37, 38, 39).

2. Machine (10) for preparing coffee-based beverages as in claim 1, **characterized in that** said image acquisition device (32, 35) and said lighting device (33) are disposed, during use, inside said hopper (22).

3. Machine (10) for preparing coffee-based beverages as in claim 1 or 2, in which said hopper (22) comprises a removable lid (25), **characterized in that** at least one of either said image acquisition device (32, 35) or said lighting device (33) is installed on said lid (25) and is powered by means of battery power supply means (28) which are also disposed on said lid (25).

4. Machine (10) for preparing coffee-based beverages as in any claim from 1 to 3, **characterized in that** said image acquisition device (32, 35) and said lighting device (33) are both integrated in a closing lid (25) of said hopper (22).

5. Machine (10) for preparing coffee-based beverages as in any claim hereinbefore, **characterized in that** said identification means also comprise a processing unit (41) comprising analysis means (42) configured to analyze at least the shape, sizes and color of the coffee beans (C1, C2, C3) represented in said image (I) and consequently assign said one or more actual characteristics (F) thereto.

6. Machine (10) for preparing coffee-based beverages as in claim 5, **characterized in that** said processing unit (41) also comprises comparison means (43) configured to compare said one or more actual characteristics (F) with one or more combinations of predetermined characteristics (FM) stored in a memory (47) of said processing unit (41), each of which is associated with a corresponding combination of predetermined functioning parameters (SM) stored in said memory of said processing unit (41), and then to associate with said one or more actual characteristics (F) a determinate combination of predetermined functioning parameters (SM) corresponding to the combination of predetermined characteristics (FM) most similar to said one or more actual characteristics (F).

7. Machine (10) for preparing coffee-based beverages as in claim 5 or 6, **characterized in that** said processing unit (41) also comprises assigning means (44) for assigning determinate numerical values (N1, ..., Nn) to said one or more actual characteristics (F), and processing means (46) that process said numerical values (N1, ..., Nn) to obtain said one or more functioning parameters (S).

8. Machine (10) for preparing coffee-based beverages as in any claim from 5 to 7, also comprising a command unit (30) configured to command and adjust the functioning of at least one of either said hopper (22), said grinding member (29), said hydraulic means (17) or said brewing means (15), **characterized in that** said processing unit (41) is configured to transmit said one or more functioning parameters (S) to said command unit (30) in order to control and adjust the functioning of at least one of either said hopper (22), said grinding member (29), said hydraulic means (17) or said brewing means (15).

9. Machine (10) for preparing coffee-based beverages as in any claim hereinbefore, **characterized in that** said one or more actual characteristics (F) comprise at least one characteristic (F1, ..., Fn) selected from a group comprising the different varieties of said beans (C1, C2, C3), the presence percentage of each of said varieties, the roasting level of said beans (C1, C2, C3) and the surface oiliness of said beans (C1, C2, C3).

10. Machine (10) for preparing coffee-based beverages as in any claim hereinbefore, **characterized in that** said one or more functioning parameters (S) comprise at least one parameter (S1, ..., Sn) selected from a group comprising the temperature of the brewing water, the brewing time, the flow rate of the brewing water, the quantity of brewing water, the brewing pressure, the quantity of coffee-based beverage to be prepared, the pre-brewing parameters comprising the temperature, the quantity of the pre-brewing water, the pre-brewing time, the beverage delivery time, the speed and flow rate of the brewing water, the granulometry and the grinding level of said coffee powder and the quantity of the latter to be subjected to brewing.

11. Method for preparing coffee-based beverages starting from coffee beans (C1, C2, C3) by means of a machine (10) having a hopper (22) configured to contain said coffee beans (C1, C2, C3), a grinding member (29) associated with said hopper (22) to grind said coffee beans (C1, C2, C3) and obtain a coffee powder (P), brewing means (15) configured to subject said coffee powder (P) to brewing and hydraulic means (17) configured to supply water to said brewing means (15), wherein said method comprises an identification step in which one or more actual characteristics (F) of said coffee beans (C1, C2, C3) are automatically identified by means of identification means (24), and one or more functioning parameters (S) for at least one of either said grinding member (29), said brewing means (15) or said hydraulic means (17) are automatically associated with said one or more actual characteristics (F), **characterized in that** said identification step provides to acquire at least two images (I) of said beans (C1, C2, C3) contained in said hopper (22), illuminated on each occasion by one of at least two lighting elements (36, 37, 38, 39) configured to emit respective light beams that have different wavelengths from each other, and to process said at least two images (I) in order to identify said one or more actual characteristics (F).

12. Method for preparing coffee-based beverages as in claim 11, **characterized in that** said identification step provides to analyze at least one of either the shape, sizes or color of said beans (C1, C2, C3) represented in said at least two images (I) in order to assign to said beans (C1, C2, C3) said one or more actual characteristics (F), selected from a group comprising the different types and/or the different varieties of said beans (C1, C2, C3), the presence percentage of each of said varieties, the roasting level of said beans (C1, C2, C3) and the surface oiliness of said beans (C1, C2, C3).

13. Method for preparing coffee-based beverages as in claim 11 or 12, **characterized in that** said identification step also provides to compare said one or more actual characteristics (F) with one or more combinations of predetermined characteristics (FM), stored in a memory of a processing unit (41), each of which is associated with a corresponding combination of predetermined functioning parameters (SM) stored in said memory of said processing unit (41), and then to associate with said one or more actual characteristics (F) a determinate combination of predetermined functioning parameters (SM) corresponding to the combination of predetermined characteristics (FM) most similar to said one or more actual characteristics (F).

14. Method for preparing coffee-based beverages as in claim 11 or 12, **characterized in that** said identification step also provides to assign determinate numerical values (N1, ..., Nn) to said one or more actual characteristics (F) and to process said numerical values (N1, ..., Nn) according to predetermined correlation equations, in order to obtain said one or more functioning parameters (S).

15. Method for preparing coffee-based beverages as in any claim from 11 to 14, **characterized in that** it also comprises an adjustment step in which the functioning parameters of said machine (10) are adjusted on the basis of said one or more functioning parameters (S).

## Patentansprüche

1. Maschine (10) zur Zubereitung von Kaffeegetränken aus Kaffeebohnen (C1, C2, C3), umfassend einen Trichter (22), der zur Aufnahme der Kaffeebohnen (C1, C2, C3) konfiguriert ist, ein Mahlwerk (29), das mit dem Trichter (22) verbunden ist, um die Kaffeebohnen (C1, C2, C3) zu mahlen und ein Kaffeepulver (P) zu erhalten, Brühmittel (15), die so konfiguriert sind, dass sie das Kaffeepulver (P) aufbrühen, Hydraulikmittel (17), die so konfiguriert sind, dass sie Wasser an die Brühmittel (15) liefern, sowie Identifizierungsmittel (24), die so konfiguriert sind, dass sie automatisch eine oder mehrere vorliegende Eigenschaften (F) der Kaffeebohnen (C1, C2, C3) identifizieren und automatisch der einen oder den mehreren dieser vorliegenden Eigenschaften (F) einen oder mehrere Funktionsparameter (S) für mindestens eines der Elemente Mahlwerk (29), Brühmittel (15) oder Hydraulikmittel (17) zuordnen, **dadurch gekennzeichnet, dass** die Identifizierungsmittel (24) mindestens eine Beleuchtungsvorrichtung (33) umfassen, die so konfiguriert ist, dass sie das Innere des Trichters (22) beleuchtet und mindestens zwei Beleuchtungselemente (36, 37, 38, 39) aufweist, die so konfiguriert sind, dass sie jeweils Lichtstrahlen mit unterschiedlichen Wellenlängen aussenden, und eine Bildaufnahmevorrichtung (32, 35) umfassen, die so konfiguriert ist, dass sie mindestens zwei Bilder (I) der Bohnen (C1, C2, C3) aufnimmt, die jedes Mal von einem der mindestens zwei Beleuchtungselemente (36, 37, 38, 39) beleuchtet werden.

2. Maschine (10) zur Zubereitung von Kaffeegetränken gemäß Anspruch 1, **dadurch gekennzeichnet, dass** die Bildaufnahmevorrichtung (32, 35) und die Beleuchtungsvorrichtung (33) während des Gebrauchs innerhalb des Trichters (22) angeordnet sind.

3. Maschine (10) zur Zubereitung von Kaffeegetränken gemäß Anspruch 1 oder 2, wobei der Trichter (22) einen abnehmbaren Deckel (25) aufweist, **dadurch gekennzeichnet, dass** mindestens eines der Elemente Bildaufnahmevorrichtung (32, 35) oder Beleuchtungsvorrichtung (33) an dem Deckel (25) angebracht ist und über eine Batteriestromversorgung (28) mit Strom versorgt wird, die ebenfalls an dem Deckel (25) angeordnet ist.

4. Maschine (10) zur Zubereitung von Kaffeegetränken gemäß irgendeinem der Ansprüche 1 bis 3, **dadurch gekennzeichnet, dass** die Bildaufnahmevorrichtung (32, 35) und die Beleuchtungsvorrichtung (33) beide in einen Verschlussdeckel (25) des Trichters (22) integriert sind.

5. Maschine (10) zur Zubereitung von Kaffeegetränken gemäß irgendeinem der vorstehenden Ansprüche, **dadurch gekennzeichnet, dass** die Identifizierungsmittel außerdem eine Verarbeitungseinheit (41) umfassen, die Analysemittel (42) umfasst, die so konfiguriert sind, dass sie mindestens die Form, die Größe und die Farbe der in dem Bild (I) dargestellten Kaffeebohnen (C1, C2, C3) analysieren und ihnen folglich die eine oder mehreren vorliegenden Eigenschaften (F) zuordnen.

6. Maschine (10) zur Zubereitung von Kaffeegetränken gemäß Anspruch 5, **dadurch gekennzeichnet, dass** die Verarbeitungseinheit (41) auch Vergleichsmittel (43) umfasst, die so konfiguriert sind, dass sie die eine oder mehreren vorliegenden Eigenschaften (F) mit einer oder mehreren Kombinationen vorbestimmter Eigenschaften (FM) vergleichen, die in einem Speicher (47) der Verarbeitungseinheit (41) gespeichert sind, von denen jede einer entsprechenden Kombination von vorbestimmten Funktionsparametern (SM) zugeordnet ist, die in dem Speicher der Verarbeitungseinheit (41) gespeichert sind, und dann den einen oder mehreren vorliegenden Eigenschaften (F) eine bestimmte Kombination von vorbestimmten Funktionsparametern (SM) zuordnen, die der Kombination von vorbestimmten Eigenschaften (FM) entspricht, die der einen oder den mehreren vorliegenden Eigenschaften (F) am ähnlichsten ist.

7. Maschine (10) zur Zubereitung von Kaffeegetränken gemäß Anspruch 5 oder 6, **dadurch gekennzeichnet, dass** die Verarbeitungseinheit (41) außerdem Zuordnungsmittel (44) umfasst, die bestimmte numerische Werte (N1, ..., Nn) den einen oder mehreren vorliegenden Eigenschaften (F) zuordnen, und Verarbeitungsmittel (46) umfasst, die die numerischen Werte (N1, ..., Nn) verarbeiten, um den einen oder die mehreren Funktionsparameter (S) zu erhalten.

8. Maschine (10) zur Zubereitung von Kaffeegetränken gemäß irgendeinem der Ansprüche 5 bis 7, die außerdem eine Steuereinheit (30) umfasst, die so konfiguriert ist, dass sie die Funktionsweise mindestens eines der Elemente Trichter (22), Mahlwerk (29), Hydraulikmittel (17) oder Brühmittel (15) steuert und einstellt, **dadurch gekennzeichnet, dass** die Verarbeitungseinheit (41) so konfiguriert ist, dass sie den einen oder die mehreren Funktionsparameter (S) an die Steuereinheit (30) überträgt, um die Funktionsweise mindestens eines der Elemente Trichter (22), Mahlwerk (29), Hydraulikmittel (17) oder Brühmittel (15) zu steuern und einzustellen.

9. Maschine (10) zur Zubereitung von Kaffeegetränken gemäß irgendeinem der vorstehenden Ansprüche, **dadurch gekennzeichnet, dass** die eine oder mehreren vorliegenden Eigenschaften (F) mindestens eine Eigenschaft (F1, ..., Fn), ausgewählt aus einer Gruppe umfassend die verschiedenen Sorten der Bohnen (C1, C2, C3), den prozentualen Anteil jeder dieser Sorten, den Röstgrad der Bohnen (C1, C2, C3) und die Oberflächenöligkeit der Bohnen (C1, C2, C3), umfassen.

10. Maschine (10) zur Zubereitung von Kaffeegetränken gemäß irgendeinem der vorstehenden Ansprüche, **dadurch gekennzeichnet, dass** die einen oder mehreren Funktionsparameter (S) mindestens einen Parameter (S1, ..., Sn), ausgewählt aus einer Gruppe umfassend die Temperatur des Brühwassers, die Brühzeit, die Durchflussrate des Brühwassers, die Menge des Brühwassers, den Brühdruck, die Menge des zuzubereitenden Kaffeegetränks, die Vorbrühparameter umfassend die Temperatur, die Menge des Vorbrühwassers, die Vorbrühdauer, die Getränkeausgabedauer, die Geschwindigkeit und Durchflussrate des Brühwassers, die Korngröße und den Mahlgrad des Kaffeepulvers und die Menge des aufzubrühenden Kaffeepulvers, umfassen.

11. Verfahren zur Zubereitung von Kaffeegetränken aus Kaffeebohnen (C1 , C2, C3) mittels einer Maschine (10) umfassend einen Trichter (22), der zur Aufnahme der Kaffeebohnen (C1, C2, C3) ausgebildet ist, ein Mahlwerk (29), das mit dem Trichter (22) verbunden ist, um die Kaffeebohnen (C1, C2, C3) zu mahlen und ein Kaffeepulver (P) zu erhalten, Brühmittel (15), die so konfiguriert sind, dass sie das Kaffeepulver (P) aufbrühen, und Hydraulikmittel (17), die so konfiguriert sind, dass sie Wasser an die Brühmittel (15) liefern, wobei das Verfahren einen Identifizierungsschritt umfasst, in dem eine oder mehrere vorliegende Eigenschaften (F) der Kaffeebohnen (C1, C2, C3) automatisch mithilfe von Identifizierungsmitteln (24) identifiziert werden, und ein oder mehrere Funktionsparameter (S) für mindestens eines der Elemente Mahlwerk (29), Brühmittel (15) oder Hydraulikmittel (17) automatisch der einen oder den mehreren vorliegenden Eigenschaften (F) zugeordnet werden, **dadurch gekennzeichnet, dass** der Identifizierungsschritt die Erfassung von mindestens zwei Bildern (I) der Bohnen (C1, C2, C3), die in dem Trichter (22) enthalten sind und jedes Mal von einem von mindestens zwei Beleuchtungselementen (36, 37, 38, 39) beleuchtet werden, die so konfiguriert sind, dass sie jeweils Lichtstrahlen mit unterschiedlichen Wellenlängen aussenden, und die Verarbeitung der mindestens zwei Bilder (I), um die eine oder mehreren vorliegenden Eigenschaften (F) zu identifizieren, vorsieht.

12. Verfahren zur Zubereitung von Kaffeegetränken nach Anspruch 11, **dadurch gekennzeichnet, dass** der Identifizierungsschritt die Analyse mindestens eines der Merkmale Form, Größe oder Farbe der in den mindestens zwei Bildern (I) dargestellten Bohnen (C1, C2, C3) vorsieht, um den Bohnen (C1, C2, C3) die eine oder mehreren vorliegenden Eigenschaften (F) zuzuordnen, die ausgewählt sind aus einer Gruppe umfassend die verschiedenen Arten und/oder Sorten der Bohnen (C1, C2, C3), den prozentualen Anteil jeder dieser Sorten, den Röstgrad der Bohnen (C1, C2, C3) und die Oberflächenöligkeit der Bohnen (C1, C2, C3).

13. Verfahren zur Zubereitung von Kaffeegetränken gemäß Anspruch 11 oder 12, **dadurch gekennzeichnet, dass** der Identifizierungsschritt auch vorsieht, die eine oder mehreren vorliegenden Eigenschaften (F) mit einer oder mehreren Kombinationen von vorbestimmten Eigenschaften (FM) zu vergleichen, die in einem Speicher einer Verarbeitungseinheit (41) gespeichert sind, von denen jede einer entsprechenden Kombination von vorbestimmten Funktionsparametern (SM) zugeordnet ist, die in dem Speicher der Verarbeitungseinheit (41) gespeichert sind, und dann der einen oder den mehreren vorliegenden Eigenschaften (F) eine bestimmte Kombination von vorbestimmten Funktionsparametern (SM) zuzuordnen, die der Kombination von vorbestimmten Eigenschaften (FM) entspricht, die der einen oder den mehreren vorliegenden Eigenschaften (F) am ähnlichsten ist.

14. Verfahren zur Zubereitung von Kaffeegetränken gemäß Anspruch 11 oder 12, **dadurch gekennzeichnet, dass** der Identifizierungsschritt auch vorsieht, den einen oder mehreren vorliegenden Eigenschaften (F) bestimmte numerische Werte (N1, ..., Nn) zuzuordnen und die numerischen Werte (N1, ..., Nn) gemäß vorbestimmten Korrelationsgleichungen zu verarbeiten, um den einen oder die mehreren Funktionsparameter (S) zu erhalten.

15. Verfahren zur Zubereitung von Kaffeegetränken gemäß irgendeinem der Ansprüche 11 bis 14, **dadurch gekennzeichnet, dass** es außerdem einen Einstellungsschritt umfasst, in dem die Funktionsparameter der Maschine (10) auf der Grundlage des einen oder der mehreren Funktionsparameter (S) eingestellt werden.

## Revendications

1. Machine (10) pour préparer des boissons à base de café à partir de grains de café (C1, C2, C3) comprenant une trémie (22) configurée pour contenir lesdits grains de café (C1, C2, C3), un élément de broyage (29) associé à ladite trémie (22) pour broyer lesdits grains de café (C1, C2, C3) et obtenir une poudre de café (P), des moyens de brassage (15) configurés pour soumettre ladite poudre de café (P) à un brassage, des moyens hydrauliques (17) configurés pour fournir de l'eau auxdits moyens de brassage (15), elle comprend également des moyens d'identification (24) configurée pour identifier automatiquement une ou plusieurs caractéristiques réelles (F) desdits grains de café (C1, C2, C3) et pour associer automatiquement à ladite une ou plusieurs caractéristiques réelles (F) un ou plusieurs paramètres de fonctionnement (S) pour au moins l'un dudit élément de broyage (29), desdits moyens de brassage (15) ou desdits moyens hydrauliques (17), **caractérisée en ce que** lesdits moyens d'identification (24) comprennent au moins un dispositif d'éclairage (33) qui est configuré pour éclairer l'intérieur de ladite trémie (22) et comporte au moins deux éléments d'éclairage (36, 37, 38, 39) qui sont configurés pour émettre des faisceaux lumineux respectifs qui ont une longueur d'onde différente les uns par rapport aux autres, et un dispositif d'acquisition d'image (32, 35) configuré pour acquérir au moins deux images (I) desdits grains (C1, C2, C3) éclairées à chaque fois par l'un desdits au moins deux éléments d'éclairage (36, 37, 38, 39).

2. Machine (10) pour préparer des boissons à base de café selon la revendication 1, **caractérisée en ce que** ledit dispositif d'acquisition d'image (32, 35) et ledit dispositif d'éclairage (33) sont disposés, pendant l'utilisation, à l'intérieur de ladite trémie (22).

3. Machine (10) pour préparer des boissons à base de café selon la revendication 1 ou 2, dans laquelle ladite trémie (22) comprend un couvercle amovible (25), **caractérisée en ce qu'**au moins l'un dudit dispositif d'acquisition d'image (32, 35) ou dudit dispositif d'éclairage (33) est installé sur ledit couvercle (25) et est alimenté au moyen de moyens d'alimentation par batterie (28) qui sont également disposés sur ledit couvercle (25).

4. Machine (10) pour préparer des boissons à base de café selon l'une quelconque des revendications 1 à 3, **caractérisée en ce que** ledit dispositif d'acquisition d'image (32, 35) et ledit dispositif d'éclairage (33) sont tous deux intégrés dans un couvercle de fermeture (25) de ladite trémie (22).

5. Machine (10) pour préparer des boissons à base de café selon l'une quelconque des revendications précédentes, **caractérisée en ce que** lesdits moyens d'identification comprennent également une unité de traitement (41) comprenant des moyens d'analyse (42) configurés pour analyser au moins la forme, les tailles et la couleur des grains de café (C1, C2, C3) représentés dans ladite image (I) et par conséquent leur attribuer lesdites une ou plusieurs caractéristiques réelles (F).

6. Machine (10) pour préparer des boissons à base de café selon la revendication 5, **caractérisée en ce que** ladite unité de traitement (41) comprend également des moyens de comparaison (43) configurés pour comparer lesdites une ou plusieurs caractéristiques réelles (F) avec une ou plusieurs combinaisons de caractéristiques prédéterminées (FM) stockées dans une mémoire (47) de ladite unité de traitement (41), chacune d'elles étant associée à une combinaison correspondante de paramètres de fonctionnement prédéterminés (SM) stockés dans ladite mémoire de ladite unité de traitement (41), puis pour associer auxdites une ou plusieurs caractéristiques réelles (F) une combinaison déterminée de paramètres de fonctionnement prédéterminés (SM) correspondant à la combinaison de caractéristiques prédéterminées (FM) les plus similaires auxdites une ou plusieurs caractéristiques réelles (F).

7. Machine (10) pour préparer des boissons à base de café selon la revendication 5 ou 6, **caractérisée en ce que** ladite unité de traitement (41) comprend également des moyens d'attribution (44) pour attribuer des valeurs numériques déterminées (N1, ..., Nn) auxdites une ou plusieurs caractéristiques réelles (F), et des moyens de traitement (46) qui traitent lesdites valeurs numériques (N1, ..., Nn) pour obtenir lesdits un ou plusieurs paramètres de fonctionnement (S).

8. Machine (10) pour préparer des boissons à base de café selon l'une quelconque des revendications 5 à 7, comprenant également une unité de commande (30) configurée pour commander et ajuster le fonctionnement d'au moins l'un de ladite trémie (22), dudit élément de broyage (29), desdits moyens hydrauliques (17) ou desdits moyens de brassage (15), **caractérisée en ce que** ladite unité de traitement (41) est configurée pour transmettre lesdits un ou plusieurs paramètres de fonctionnement (S) à ladite unité de commande (30) afin de commander et d'ajuster le fonctionnement d'au moins l'un de ladite trémie (22), dudit élément de broyage (29), desdits moyens hydrauliques (17) ou desdits moyens de brassage (15).

9. Machine (10) pour préparer des boissons à base de café selon l'une quelconque des revendications précédentes, **caractérisée en ce que** lesdites une ou plusieurs caractéristiques réelles (F) comprennent au moins une caractéristique (F1, ..., Fn) sélectionnée dans un groupe comprenant les différentes variétés desdits grains (C1, C2, C3), le pourcentage de présence de chacune desdites variétés, le niveau de torréfaction desdits grains (C1, C2, C3) et l'onctuosité de surface desdits grains (C1, C2, C3).

10. Machine (10) pour préparer des boissons à base de café selon l'une quelconque des revendications précédentes, **caractérisée en ce que** lesdits un ou plusieurs paramètres de fonctionnement (S) comprennent au moins un paramètre (S1, ..., Sn) choisi dans un groupe comprenant la température de l'eau de brassage, le temps de brassage, le débit de l'eau de brassage, la quantité d'eau de brassage, la pression de brassage, la quantité de boisson à base de café à préparer, les paramètres de pré-brassage comprenant la température, la quantité d'eau de pré-brassage, le temps de pré-brassage, le temps de distribution de la boisson, la vitesse et le débit de l'eau de brassage, la granulométrie et le niveau de broyage de ladite poudre de café et la quantité de cette dernière à soumettre au brassage.

11. Procédé pour préparer des boissons à base de café à partir de grains de café (C1, C2, C3) au moyen d'une machine (10) ayant une trémie (22) configurée pour contenir lesdits grains de café (C1, C2, C3), un élément de broyage (29) associé à ladite trémie (22) pour broyer lesdits grains de café (C1, C2, C3) et obtenir une poudre de café (P), des moyens de brassage (15) configurés pour soumettre ladite poudre de café (P) à des moyens de brassage et des moyens hydrauliques (17) configurés pour fournir de l'eau auxdits moyens de brassage (15), dans lequel ledit procédé comprend une étape d'identification dans laquelle une ou plusieurs caractéristiques réelles (F) desdits grains de café (C1, C2, C3) sont automatiquement identifiées au moyen de moyens d'identification (24), et un ou plusieurs paramètres de fonctionnement (S) pour au moins un desdits éléments de broyage (29), desdits moyens de brassage (15) ou desdits moyens hydrauliques (17) sont automatiquement associés auxdites une ou plusieurs caractéristiques réelles (F), **caractérisé en ce que** ladite étape d'identification permet d'acquérir au moins deux images (I) desdits grains (C1, C2, C3) contenus dans ladite trémie (22), éclairés à chaque occasion par l'un d'au moins deux éléments d'éclairage (36, 37, 38, 39) configurés pour émettre des faisceaux lumineux respectifs qui ont des longueurs d'onde différentes l'une de l'autre, et pour traiter lesdites au moins deux images (I) afin d'identifier lesdites une ou plusieurs caractéristiques réelles (F).

12. Procédé pour préparer des boissons à base de café selon la revendication 11, **caractérisé en ce que** ladite étape d'identification prévoit d'analyser au moins l'une de la forme, des tailles ou de la couleur desdits grains (C1, C2, C3) représentés dans lesdites au moins deux images (I) afin d'attribuer auxdits grains (C1, C2, C3) lesdites une ou plusieurs caractéristiques réelles (F), sélectionnées dans un groupe comprenant les différents types et/ou les différentes variétés desdits grains (C1, C2, C3), le pourcentage de présence de chacune desdites variétés, le niveau de torréfaction desdits grains (C1, C2, C3) et l'onctuosité de surface desdits grains (C1, C2, C3).

13. Procédé pour préparer des boissons à base de café selon la revendication 11 ou 12, **caractérisé en ce que** ladite étape d'identification prévoit également de comparer lesdites une ou plusieurs caractéristiques réelles (F) avec une ou plusieurs combinaisons de caractéristiques prédéterminées (FM), stockées dans une mémoire d'une unité de traitement (41), chacune étant associée à une combinaison correspondante de paramètres de fonctionnement prédéterminés (SM) stockée dans ladite mémoire de ladite unité de traitement (41), puis d'associer auxdites une ou plusieurs caractéristiques réelles (F) une combinaison déterminée de paramètres de fonctionnement prédéterminés (SM) correspondant à la combinaison de caractéristiques prédéterminées (FM) les plus similaires auxdites une ou plusieurs caractéristiques réelles (F).

14. Procédé pour préparer des boissons à base de café selon la revendication 11 ou 12, **caractérisé en ce que** ladite étape d'identification prévoit également d'attribuer des valeurs numériques déterminées (N1, ..., Nn) auxdites une ou plusieurs caractéristiques réelles (F) et de traiter lesdites valeurs numériques (N1, ..., Nn) selon des équations de corrélation prédéterminées, afin d'obtenir lesdits un ou plusieurs paramètres de fonctionnement (S).

15. Procédé pour préparer des boissons à base de café selon l'une quelconque des revendications 11 à 14, **caractérisé en ce qu'**il comprend également une étape de réglage dans laquelle les paramètres de fonctionnement de ladite machine (10) sont réglés sur la base dudit ou desdits paramètres de fonctionnement (S).
